(19) Europäisches Patentamt
European Patent Office
Office européen des brevets

(11) **EP 4 300 312 B1**

(12) **EUROPEAN PATENT SPECIFICATION**

(45) Date of publication and mention of the grant of the patent:
**31.12.2025 Bulletin 2026/01**

(21) Application number: **21931367.3**

(22) Date of filing: **15.03.2021**

(51) International Patent Classification (IPC):
**G06F 11/07** (2006.01)        **G06F 11/14** (2006.01)
**G06F 21/56** (2013.01)        **G06F 21/64** (2013.01)

(52) Cooperative Patent Classification (CPC):
**G06F 11/0793; G06F 21/568;** G06F 2201/82;
G06F 2201/83

(86) International application number:
**PCT/ES2021/070185**

(87) International publication number:
**WO 2022/195134 (22.09.2022 Gazette 2022/38)**

(54) **FILE REGENERATION METHOD AND COMPUTER PROGRAMS FOR SAME**

DATEIREGENERATIONSVERFAHREN UND COMPUTERPROGRAMME DAFÜR

PROCÉDÉ POUR LA GÉNÉRATION DE FICHIERS ET PROGRAMMES D'ORDINATEUR DUDIT PROCÉDÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**03.01.2024 Bulletin 2024/01**

(73) Proprietor: **Telefonica Innovacion Digital SL**
**28050 Madrid (ES)**

(72) Inventors:
• **RAMÍREZ VICENTE, Francisco José**
**28013 Madrid (ES)**
• **SAUCEDO DE MIGUEL, Pablo**
**28013 Madrid (ES)**
• **RIVERA MARTÍNEZ, Marcos**
**28013 Madrid (ES)**

(74) Representative: **Carlos Hernando, Borja et al**
**Garrigues IP, S.L.P.**
**Plaza de Colón, 2**
**28046 Madrid (ES)**

(56) References cited:
EP-A2- 0 953 931        CN-A- 111 026 583
FR-A1- 3 013 257        US-B1- 8 667 273

• **DATTA GUPTA KISHOR ET AL:** "A Genetic Algorithm Approach to Regenerate Image from a Reduce Scaled Image Using Bit Data Count", BROAD RESEARCH IN ARTIFICIAL INTELLIGENCE AND NEUROSCIENCE, 8 June 2018 (2018-06-08), pages 1 - 11, XP093226808, Retrieved from the Internet <URL:https://lumenpublishing.com/journals/index.php/brain/article/view/2031/1688>
• **GUPTA ANKUR ET AL:** "A metaheuristic method to hide MP3 sound in JPEG image", NEURAL COMPUTING AND APPLICATIONS, SPRINGER LONDON, LONDON, vol. 30, no. 5, 20 December 2016 (2016-12-20), pages 1611 - 1618, XP036572952, ISSN: 0941-0643, [retrieved on 20161220], DOI: 10.1007/S00521-016-2759-9
• **HUSSIEN HUSSIEN ET AL:** "How can I read a binary file and turn the data into an image?", 9 May 2019 (2019-05-09), pages 1 - 3, XP093226812, Retrieved from the Internet <URL:https://stackoverflow.com/questions/10763298/how-can-i-read-a-binary-file-and-turn-the-data-into-an-image>

- **GAD AHMED: "Reproducing Images using a Genetic Algorithm with Python", 20 October 2019 (2019-10-20), pages 1 - 21, XP093226816, Retrieved from the Internet <URL:https://www. linkedin.com/pulse/ reproducing-images-using-genetic-algorithm-py thon-ahmed-gad>**

**Description**

Technical field

The present invention relates to a file regeneration method, particularly using images and artificial intelligence algorithms, and computer programs of the method.

Background of the invention

In the world of cybersecurity, the protection of data (specifically, files) is possibly the most complex and important task. Either due to errors in the consistency of the files (errors in part of their architecture) or due to external attacks (for example, ransomware), the recovery or regeneration of these files becomes an essential task in order not to lose said information. Until now, the task of the different programs in charge of regenerating said files in case of modification or alteration, has been based on restoring the original file from a copy of the file located in a storage location.

Image processing is possibly the application with the most potential within Artificial Intelligence. There are many algorithms capable of processing the data of an image to subsequently carry out practically any type of operation with them. More particularly, machine learning algorithms and genetic cellular automata are especially effective in image processing. All of them allow images to be regenerated practically from scratch starting from an entropy base.

Document "A Genetic Algorithm Approach to Regenerate Image from a Reduce Scaled Image Using Bit Data Count", Kishor Datta Gupta, discloses a multi-objective genetic algorithm to recover lost bits while image resized to the smaller version using the original image data bit counts which are stored while the image is scaled. The method is very scalable to apply in a distributed system. Also, the same method can be applied to recover error bits in any types of data blocks.

On the other hand, FR3013257 relates to an identification document comprising a physical medium bearing at least one alphabetical inscription identifying the bearer of the document, and at least one two-dimensional barcode identifying the bearer of the document. It comprises at least two two-dimensional barcodes on which complementary parts of the same identification file (IFID) of the document holder are coded.

Disclosure of the invention

An object of the present invention is to create an Artificial Intelligence model to create a model for each of the files to be protected. In this way, simply with the generated image, it is possible to return to its original state in case of modification or manipulation. In this way, said Artificial Intelligence can monitor critical files in a system and restore them whenever there is some type of unauthorized modification, always starting from the "genetic signatures" in image format. In addition, it is possible to extract different "signatures" or even portions of the file to avoid its subsequent regeneration, thus increasing its protection.

To this end, exemplary embodiments of the present invention provide, according to a first aspect, a file regeneration method that comprises converting, by means of a processing unit, an original file to be protected against losses, destruction or deletion, into an image with a specific image format, by running an encoding (or transformation) algorithm on one or more bit chains of the original file, wherein the encoding algorithm encodes the bit chain(s) in a pixel value in a given colour, obtaining an image fingerprint of the original file as a result; and regenerating, by means of the processing unit, the file (or at least a part of same) by running a reconstruction algorithm on the image fingerprint of the original file.

In an exemplary embodiment, the original file is a binary file.

In an exemplary embodiment, prior to the regeneration step, the image print of the original file is stored in a memory or database.

In an exemplary embodiment, the encoding algorithm comprises converting all the characters of the original file to decimal format according to a Standard for Information Interchange, particularly ASCII, and encoding the converted characters back to binary format; grouping all the bits of the bit chain(s) into groups of a given number and adding some padding bits, providing a larger binary file; and translating the oversized binary file into decimal format and encoding decimal values in the pixel value in a given colour.

In an exemplary embodiment, the grouping step is performed by means of a base64 encoding, said given number being 6.

In an exemplary embodiment, the padding bits comprise at least two bits.

In an exemplary embodiment, the reconstruction algorithm comprises a genetic cellular automaton. In this case, said fingerprint comprises random pixel values, and the genetic cellular automaton calculates a metric to adapt the original file to the fingerprint and changes values of a percentage of the pixels of the fingerprint to a random value in a defined range. Therefore, the regenerated file (or part of same) is what is the most similar to the original file.

In other exemplary embodiments, the reconstruction algorithm can be based on autoencoders, generative adversarial networks (GANs), cellular automata, recurrent neural networks or LSTMs, convolutional networks (CNN), among others.

In an exemplary embodiment, the step of converting the original file to an image also comprises running a steganography algorithm that adds a series of metadata to the image. For example, the series of metadata may include a symmetric key. The series of metadata may be included in the first two bits of each pixel.

According to the present invention, the image format is selected from a series of image formats consisting of one or more of: a JPEG, PNG, GIF, TIFF, MPEG, or any other image format. Similarly, said pixel value may comprise a colour, black/white or gray tone value.

Other embodiments of the invention which are disclosed herein also include computer program products for performing the steps and operations of the method proposed in the first aspect of the invention. More particularly, a computer program product is an embodiment that has a computer-readable medium including computer program instructions coded therein which, when executed in at least one processor of a computer system, cause the processor to perform the operations indicated herein as embodiments of the invention.

The present invention transfers the power of automatic learning algorithms and/or genetic cellular automata when it comes to regenerating files affected, for example, by malware, ransomware or any other type of threat (in the style of a HIDS). In this way, the copy of the file is based on an image file instead of a binary file. The invention adds an extra layer of security that allows encryption and also, due to its nature, prevents reverse engineering analysis.

The present invention offers a completely new and original approach to conventional file protection. By using images instead of the original file, it is never exposed to its possible deletion, modification or analysis (reverse engineering), among other advantages. In addition, when using these images, data protection (data encryption) and compression are applied by means of different techniques common to image manipulation, in addition to opening the possibility of detecting characteristics between different files that would not have been possible to find otherwise.

By being able to convert any type of file into an image and process it through artificial intelligence algorithms or a genetic cellular automaton (or genetic algorithms), a series of benefits is obtained, which increases its protection and opens up new techniques to explore based on image management. The non-exposure of the original file (or its backup) and in turn exposing an image file, which may even be incomplete or encoded, increases protection against a possible information leak or even prevents analysis by reverse engineering (in the case of being a binary). Moreover, by having a complete genetic signature of the files processed by this security solution, it is easy to regenerate both from scratch and from a part of same quickly and securely.

Brief description of the drawings

The foregoing and other features and advantages will be more fully understood from the following detailed description, by way of mere illustration and not limitation, of some exemplary embodiments with reference to the attached drawings, wherein:

Figure 1 is a flowchart of the process for converting a binary file into an image, according to an exemplary embodiment of the present invention.

Figure 2 is a flowchart of the cycle of a genetic algorithm.

Figure 3 illustrates an example of the crossover process between parents performed by the genetic algorithm.

Figure 4 illustrates an example of the mutation process performed by the genetic algorithm.

Figure 5 illustrates an example of an original file (left) and its equivalent converted into an image.

Figure 6 illustrates the different states of the generation of the image by applying the genetic algorithm running 10000 generations.

Figure 7 illustrates an example of the complete flow of operations performed by the present invention.

Detailed description of the invention and exemplary embodiments

There are currently a multitude of file formats, each one following its own protocol, which generally defines the header to be included, along with its fields, the codec for writing the content and the file footer, as well as the sizes of each one. For a file of a certain format to be valid, that is, for it to be understood by a format interpreter, it must comply with all the indications of the definition of the protocol, the header being especially critical.

For this reason, a tool intended to recover any type of file must be abstracted from any format protocol. For this purpose, the present invention uses the lowest level of any file, that is, its binary encoding. Using the file in binary format has advantages such as the aforementioned or that the domain of the encoding values is reduced from 256, in an ASCII file, to 2. On the other hand, the biggest drawback it presents is the loss of control of the data, since by not knowing which part of the file to which a given bit corresponds, it is necessary to be much more precise in the regeneration. An erroneous bit in the file header can make the file invalid, which would not happen if it were part of the body of the file.

To remedy the drawback of working directly with the bit chain, the present invention converts it into image format, which will be used to regenerate the original file. In some exemplary embodiments, this transformation/encoding uses base64 encoding, that is, it groups the bits into groups of 6 to obtain values between 0 and 63, which will be used as the values of the pixels in gray scale (or another colour) of the generated image.

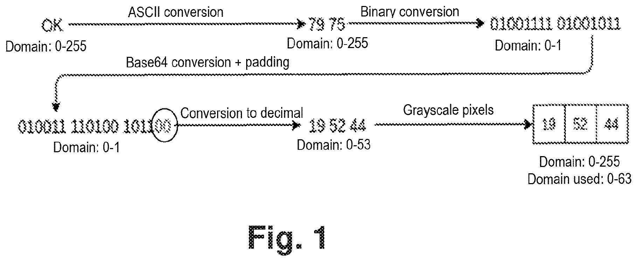

In Figure 1, the whole conversion process is clearly shown. This begins by converting all the characters in the file into their decimal equivalent according to the ASCII table to subsequently encode them in binary format. The next step groups all the bits into groups of 6 and adds padding, marked with a circle, to complete all the groups; this is why the converted images will have a larger size in bytes than the original files, as explained below. Finally, the decimal values when translating from base64 are encoded as the gray levels of the final image pixels.

As can be seen, the domain of the values is reduced to an intermediate value of 64, which favors the convergence of the recovery algorithm, since it delimits the values to a greater extent than domain 256, and reduces the number of values to be regenerated with respect to the binary encoding, which would mean an increase of 800% with respect to the original file. Base64 encoding, as previously indicated, implies an increase in the size in bytes of the final file due to the padding which is needed to group all the bits together. In some examples, the new size can be calculated using the following formulas:

$$bits_{ascii} = n_{chars} * 8$$

$$bytes_{b64} = (bits_{ascii}//6) + 1$$

Where *nchars* is the number of characters in the original file. Since each character is represented by one byte, the number of bytes in the ascii file is equal to the total number of characters. All these comparisons are reflected in *Table 1:*

Table 1. Comparative table between formats

|  | Original text | ASCII | Base64 | Binary |
|---|---|---|---|---|
| #Values to regenerate | 'Text' | 5 | 7 | 40 |
| File size (bytes) | 'Text' | 5 | 7 | 5 |
| #Values in the domain | 'Text | 256 | 64 | 2 |
| Size of image to regenerate (bytes) | 'Text' | 5 | 7 | 40 |

Once the file is converted into an image, it will act as a file fingerprint that can be used to regenerate the original, using a reconstruction algorithm to do so. The image pixel sequence will be the target chromosome (that is, pixel value) of the reconstruction algorithm. The output of the reconstruction algorithm will be the chromosome of the best individual, which corresponds to a sequence of pixel values. Therefore, it will be necessary to be able to revert from chromosome to text. To do this, the decimal values of the chromosome must be encoded in binary value, to later group them into groups of 8 again to transform each of the bytes to their value in ASCII.

In an exemplary embodiment, the reconstruction algorithm is a genetic algorithm. Genetic algorithms are optimization, search and learning algorithms that make a population of individuals (in this case, a set of images) evolve by subjecting it to random actions similar to those that take place in biological evolution: crossover, mutation and selection of parents. These transformations are governed by a metric, the fitness that measures the 'adaptation to the environment' of the individual. Therefore, those individuals with a higher fitness (more adapted) will be those that last throughout the generations.

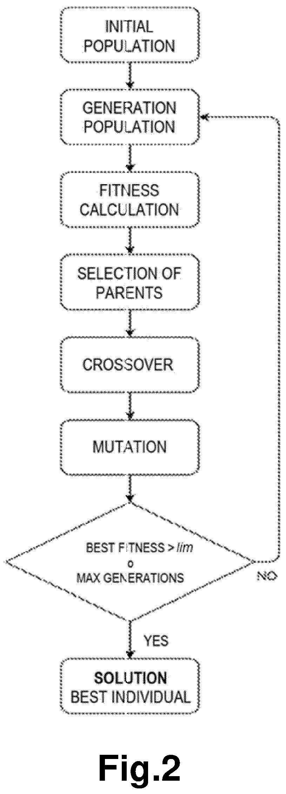

Figure 2 shows the life cycle of a genetic algorithm, in which its use for file regeneration is carried out as follows:

1. Initial population:

In the initial set of candidate images, the genetic algorithm is essential for development. It is a set of images, that is, sequences of pixel values. To rebuild a file that is damaged, one might think that the algorithm's initial set of candidate images should be defined as the value chain of the image generated from the damaged file; but that is really not positive.

The explanation comes from the fact that, for the algorithm to function correctly, the highest possible entropy must be generated in the initial set of candidate images, since new values will only be generated during the life cycle as a result of mutations, and these will be quite scarce. Therefore, it is much more positive to contemplate the largest possible number of pixel value options in the initial set of candidate images and then those that are not correct are deleted as a result of the crossovers plus the selection of parents, which are the images selected to evolve.

The need to generate the maximum entropy means that the best selection from the initial set of candidate images is the one with random pixel values. This is very positive for the regeneration work since the method starts from a random situation to regenerate the file in its entirety. This means that the algorithm will be able to regenerate a file, even if it is partially or totally damaged or has even been deleted.

2. Generation population

The generation population is the set of images that will start all the generation processes. For the first generation, the initial set of candidate images will be used, then the output of the previous generation will be used.

3. Fitness calculation

Fitness is the 'adaptation to the medium' of the image. In this case, an image will be more adapted if it is more similar to the target image, that is, greater fitness means that the image of the original file is more similar to the image of the individual, therefore, the file that is generated from the image of the individual is more similar to the original file. Therefore, it is necessary to maximize fitness to arrive at the solution.

The fitness calculation can be performed as follows:

$$fitness = 1/(\sum_{i=0}^{i} ||ctarget_i - cindividual_i||)$$

where *l* is defined as the length of the chain of pixel values, *ctarget* is the target pixel sequence and *individual* is the generated pixel sequence. Fitness is calculated for each image of the generation, which will allow an ordered list to be made starting with the one that obtains a greater adaptation and ending with the one with the least, which will be used in the next step.

4. Selection of parents

Once the individuals have been ordered according to their fitness, two sets must be selected from:

- Elite set: A subset of images are selected from the set of images of the current generation following a specific technique. The individuals that belong to this subset will pass directly to the next generation without undergoing any other modification. This set makes it possible, on the one hand, to never worsen the best fitness with respect to the previous generation and, on the other, to prevent the algorithm from stagnating at some local fitness maximum.
- Crossover set: For this set, the first n images of the fitness classification are selected and will be used to evolve the set of candidate images generated by crossover in the next generation.

5. Crossover

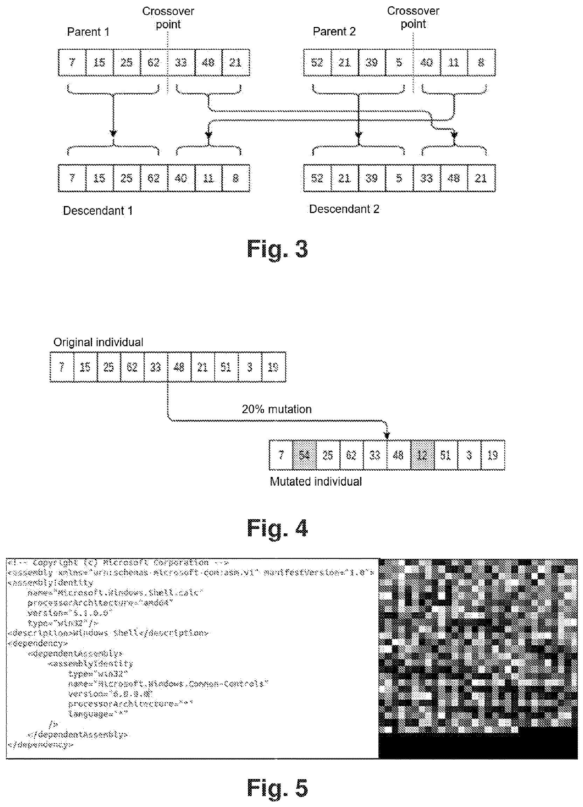

The crossover process consists of making random combinations between the set of candidate images to obtain from them two new different candidate images, which will be the combination of the parents following one of the available crossover techniques, such as the one illustrated in Figure 3. The crossovers will be more positive in the early generations, where it is necessary to try different combinations and select the best images. In the more advanced generations, the process that becomes more important is mutation.

6. Mutation

The mutation process consists of changing the values of a percentage of the pixels to a random value in a defined range. In the particular example of having used base64 encoding, the mutation will select, for each pixel to be mutated, a new value between 0 and 63. This process is the only one, along with the selection of the initial set of candidate images, that will enter new values into the set of solutions. The process is illustrated in Figure 4.

7. Stop conditions

Once all the generation processes have been performed on the set of images, the stop conditions must be checked. One of them is if the maximum number of generations defined in the algorithm has been reached, thereby obtaining the best image of the last generation as a solution. The other contemplates an infinite number of generations, but in which, at the end, the fitness of the best image is checked. In the event that the fitness is above a previously established limit, that image will be the solution of the algorithm.

Some of the advantages of running genetic algorithms are:

- Storage: Genetic algorithms do not use any model, so nothing more than the algorithm will be necessary for their use.
- Resources: The training of deep neural networks requires a large consumption of resources due to the back-propagation algorithm.
- Versatility: The genetic algorithm is capable of regenerating images regardless of the original programming language, due to its level of abstraction that allows pixels to be used as chromosomes.
- Parallelization: The generation of individuals is an easily parallelizable task, so it positively affects performance.

However, in other exemplary embodiments, the reconstruction algorithm may comprise autoencoders, generative adversarial networks (GANs), cellular automata, recurrent neural networks or LSTMs, convolutional networks (CNNs), etc. These algorithms seek to optimize the cost function (usually averaged) by means of the back-propagation algorithm, which assumes always finding a minimum (local or global), which can be acceptable for other regeneration tasks. Much more precision is required for this task than in the case of the genetic algorithm.

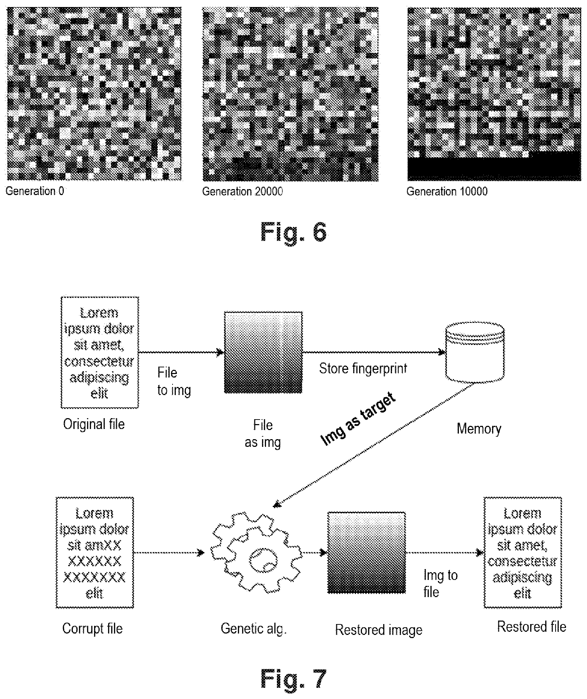

The proposed method consists of two different parts: file to image (and vice versa) transformation algorithms and regeneration of same. In the first step, the objective of versatility is achieved, since the images allow standardizing any type of file, regardless of the programming language or its structure. The second step, the reconstruction algorithm, particularly a genetic algorithm, transforms the image into the chromosome (pixel value) of the target individual and can then be used to regenerate any part of the file. Another of the greatest capabilities of this algorithm is that it starts from a situation of maximum entropy, which means that it starts from an initial population of individuals with random chromosomes. The advantage of this is that it is capable of regenerating files that have been partially or totally corrupted, and may even have been deleted. Figure 5 shows an example of an original file and its equivalent converted into an image. Figure 6 shows an example of the different states of the generation of the image by applying the genetic algorithm running 100000 generations. Putting both steps together, the solution operation flow is illustrated in Figure 7.

Some specific cases of use for the implementation of the present invention are detailed below:

1. Recovery of damaged files: In an environment where there are critical files for operation, it is important to have a type of backup that makes it possible to regenerate them if necessary. Therefore, the operation would consist of storing their representations in images so that, when necessary, they can be used, in conjunction with the reconstruction algorithm, to be able to have the original files again. This regeneration can be static, as explained above, but it can also be done dynamically. What is proposed is to use the images as a fingerprint of the files, which would make it possible to deploy a control system for same in charge of monitoring whether these files are damaged and then to be able to regenerate them on the fly. In addition, another positive factor that this solution allows is the possibility of regenerating only a part of the file. To perform this task, it is enough to select a part of the individual's chromosome, that is, a part of the pixels of the image of the file.

2. Security: Another case of use is to provide security to the files, as a result of the abstraction in images. Each of the pixels of the images in the files represents a value in base64, the minimum of which is 0 and maximum is 63, and the number of bits necessary to represent this range is 6. However, because the images are defined in gray scale, the range of values of which is from 0 to 255, therefore represented with 8 bits, there being a margin of 2 free bits per pixel to insert information. The proposal involves entering, using steganography techniques, a symmetric key into the images of the files. This is another advantage that is acquired when making the domain change from files to images. The key, in the form of text, will be entered in the first 2 bits of each pixel, increasing the range of values to 256. The reconstruction algorithm can then, if necessary, regenerate the image of the file together with the concealed message. As a drawback, it must be taken into account that, by increasing the range of pixel values, algorithm convergence is hindered. Once recovered, the message can be salvaged from the image, which turns out to be the key, and with this, it is possible to check whether the file is original. Furthermore, it would be possible to extract different pieces of information from the file as a security measure. Therefore, even if the original image file were exposed, without that extracted portion (which could even be encoded or even compressed), it would be practically impossible to regenerate it.

3. Host-based Intrusion Detection System (HIDS): Current HIDS use mechanisms for checking the integrity of files based on the comparison of a hash or digest algorithm. However, in the case of HIDS with genetic algorithms, their integrity is checked based on the genetic fingerprints (calculated with genetic algorithms) of the files. The proposed solution can complement and alert the user of a file modification through the use of said genetic algorithms at any level of alteration and also, proceed to its recovery. In the event that the attacker can generate a collision in the file at the hash level, that is, that he can modify the file, but the resulting hash is the same as the original, this change could be detected as a result of the proposed solution based on genetic algorithms.

4. Other possible cases of use would be to take advantage of feature extraction to compress and index the resulting image files.

Some of the advantages achieved by the invention are:

- File protection (file restoration) against modification or deletion.
- Restoration of all types of files, both partial and complete, starting from a generated image.
- Independence of the file format (it works with any).
- Creation of a unique genetic chromosome (that is, pixel value) based on the file structure, which can be exported or imported for regeneration in any system that runs this solution.
- It allows adding information (steganography) such as, for example, protection of the rights of the file or even new features of the file (metadata).
- It is possible to extract fragments from the file (which could act as a "key" for encryption) or even the image of a generation prior to the final one, in order to be able to share the file securely by not offering any type of information about it.
- Since it is an image, even a modified one (that is, if a security technique is applied, the image does not correspond 100% to the base file), it is not possible to apply reverse engineering techniques to extract information.
- It allows the secure extraction of parts or fragments of the file which could be used as a protective measure.
- The backup copies of the files could be stored in images, thus avoiding exposing the original files.
- Analysis of the images generated from the files to find similar features, for example, to detect malware.
- HIDS to monitor, analyze and manage possible alterations that a file may undergo based on its genetic signature (based on images).

The proposed invention can be implemented in hardware, software, firmware or any combination thereof. If it is implemented in software, the functions can be stored in or coded as one or more instructions or code in a computer-readable medium.

The computer readable medium includes a computer storage medium. The storage medium can be any available medium that can be accessed by a computer. By way of example, and not limitation, such computer-readable medium may comprise RAM, ROM, EEPROM, CD-ROM or other optical disk storage, solid-state or magnetic disk storage, or other magnetic storage devices, or any other media that can be used to carry or store desired program code in the form of instructions or data structures and that can be accessed by means of a computer. Disk and disc, as used herein, include compact disc (CD), laser disc, optical disc, digital versatile disc (DVD), floppy disk, and Blu-ray disc where disks typically reproduce data magnetically, while discs reproduce data optically with lasers. Combinations of the above should also be included within the scope of computer-readable media. Any processor and storage medium can reside in an ASIC. The ASIC may reside in a user terminal. Alternatively, the processor and storage medium may reside as discrete components in a user terminal.

As used herein, the computer program products comprising computer-readable media include all forms of computer-readable media, except to the extent that such media is not considered to be non-established transient propagation signals.

The scope of the present invention is defined in the attached claims.

**Claims**

1. A file regeneration method, comprising:

converting, by a processing unit, an original binary file to be protected against losses, destruction or deletion, into an image with a specific image format by running an encoding algorithm on one or more bit chains of the original binary file, the encoding algorithm encoding the bit chain(s) in pixel values of a given colour, obtaining an image fingerprint of the original file as a result; and

regenerating, by the processing unit, at least a part of the file by running a reconstruction algorithm on the obtained image fingerprint of the original binary file; wherein:
the encoding algorithm further comprises:

converting the characters of the original binary file to decimal format according to a standard for information interchange and encoding the converted characters in binary format;
grouping the bits of the bit chain(s) into groups of a given number by means of a base64 encoding, said given number being 6, and adding some padding bits, thereby producing a larger binary file; and
translating the larger binary file to decimal format and encoding decimal values in said pixel values of a given colour; and

the reconstruction algorithm comprises a genetic cellular automaton.

2. The method according to claim 1, wherein prior to the regeneration step, the image fingerprint of the original binary file is stored in a memory or database.

3. The method according to claim 1, wherein the padding bits comprise at least two bits.

4. The method according to claim 1, wherein the image fingerprint of the original binary file comprises random pixel values, and wherein the genetic cellular automaton:

calculates a metric to adapt the original binary file to the fingerprint; and
changes values of a percentage of pixels of the fingerprint to a random value in a defined range,

wherein said at least one regenerated part of the file is more similar to the original binary file.

5. The method according to any one of the preceding claims, wherein the step of converting the original binary file to an image further comprises running a steganography algorithm that adds a series of metadata to the image.

6. The method according to claim 5, wherein the series of metadata includes a symmetric key.

7. The method according to claim 5 or 6, wherein the series of metadata is included in the first two bits of each pixel.

8. The method according to any one of the preceding claims, wherein the image format is selected from a series of image formats comprising one or more of: a JPEG, PNG, GIF, TIFF, MPEG, or any other image format.

9. The method according to any one of the preceding claims, wherein the given colour comprises black/white or a gray tone.

10. A computer program including code instructions which, when run in a computer system, carry out the method according to any one of claims 1 to 9.

**Patentansprüche**

1. Dateiwiederherstellungsverfahren, das Folgendes umfasst:

das Konvertieren einer binären Originaldatei, die vor Verlust, Zerstörung oder Löschen geschützt werden soll, in ein Bild mit einem bestimmten Bildformat durch eine Verarbeitungseinheit, durch Ausführung eines Codierungsalgorithmus auf einer oder mehreren Bitketten der binären Originaldatei, wobei der Codierungsalgorithmus die Bitkette(n) in Pixelwerten einer bestimmten Farbe kodiert, und als Ergebnis ein Bildfingerabdruck der Originaldatei erhalten wird; und
das Wiederherstellen mindestens eines Teils der Datei durch die Verarbeitungseinheit, durch Ausführung eines Rekonstruktionsalgorithmus auf dem erhaltenen Bildfingerabdruck der ursprünglichen Binärdatei;
wobei:
der Codierungsalgorithmus ferner Folgendes umfasst:

das Konvertieren der Zeichen der ursprünglichen Binärdatei in das Dezimalformat gemäß einem Standard für den Informationsaustausch und die Codierung der konvertierten Zeichen im Binärformat;

das Gruppieren der Bits der Bitkette(n) in Gruppen mit einer vorgegebenen Anzahl mittels einer base64-Codierung, wobei die vorgegebene Zahl 6 ist und Füllbits hinzugefügt werden, wodurch eine größere Binärdatei erzeugt wird; und

das Umwandeln der größeren Binärdatei in das Dezimalformat und die Codierung der Dezimalwerte in den Pixelwerten einer bestimmten Farbe; und wobei der Rekonstruktionsalgorithmus einen genetischen zellulären Automaten umfasst.

2. Verfahren nach Anspruch 1, wobei vor dem Wiederherstellungsschritt der Bildfingerabdruck der ursprünglichen Binärdatei in einem Speicher oder einer Datenbank gespeichert wird.

3. Verfahren nach Anspruch 1, wobei die Füllbits mindestens zwei Bits umfassen.

4. Verfahren nach Anspruch 1, wobei der Bildfingerabdruck der ursprünglichen Binärdatei zufällige Pixelwerte umfasst, und wobei der genetische zelluläre Automat:

eine Metrik zur Anpassung der ursprünglichen Binärdatei an den Fingerabdruck berechnet; und
die Werte eines Prozentsatzes der Pixel des Fingerabdrucks in einen Zufallswert in einem definierten Bereich ändert,

wobei der mindestens eine wiederhergestellte Teil der Datei der ursprünglichen Binärdatei ähnlicher ist.

5. Verfahren nach einem der vorhergehenden Ansprüche, wobei der Schritt des Umwandelns der ursprünglichen Binärdatei in ein Bild ferner die Ausführung eines Steganografie-Algorithmus umfasst, der dem Bild eine Reihe von Metadaten hinzufügt.

6. Verfahren nach Anspruch 5, wobei die Reihe von Metadaten einen symmetrischen Schlüssel enthält.

7. Verfahren nach Anspruch 5 oder 6, wobei die Reihe von Metadaten in den ersten beiden Bits jedes Pixels enthalten ist.

8. Verfahren nach einem der vorhergehenden Ansprüche, wobei das Bildformat aus einer Reihe von Bildformaten ausgewählt wird, die eines oder mehrere der folgenden Formate umfassen: JPEG, PNG, GIF, TIFF, MPEG oder ein anderes Bildformat.

9. Verfahren nach einem der vorhergehenden Ansprüche, wobei die vorgegebene Farbe Schwarz/Weiß oder einen Grauton umfasst.

10. Computerprogramm mit Codeanweisungen, die, wenn sie in einem Computersystem ausgeführt werden, das Verfahren nach einem der Ansprüche 1 bis 9 durchführen.

**Revendications**

1. Procédé de régénération de fichier, comprenant :

la conversion, par une unité de traitement, d'un fichier binaire original à protéger contre les pertes, la destruction ou l'effacement, en une image avec un d'image format spécifique en exécutant un algorithme d'encodage sur une ou plusieurs chaînes de bits du fichier binaire original, l'algorithme d'encodage encodant la ou les chaîne(s) de bits en valeurs de pixels d'une couleur donnée, obtenant une empreinte d'image du fichier original en résultat ; et
la régénération, par l'unité de traitement, d'au moins une partie du fichier en exécutant un algorithme de reconstruction sur l'empreinte d'image obtenue du fichier binaire original ;
dans lequel :
l'algorithme d'encodage comprend en outre :

la conversion des caractères du fichier binaire original en format décimal selon une norme d'échange d'informations et l'encodage des caractères convertis en format binaire ;
le regroupement des bits de la ou des chaîne(s) de bits en groupes d'un nombre donné par le biais d'un encodage base64, ledit nombre donné étant 6, et l'ajout de quelques bits de remplissage, produisant de ce fait un fichier binaire plus volumineux ; et

la traduction du fichier binaire plus volumineux en format décimal et l'encodage des valeurs décimales dans lesdites valeurs des pixels d'une couleur donnée ; et

l'algorithme de reconstruction comprend un automate cellulaire génétique.

2.  Procédé selon la revendication 1, dans lequel avant l'étape de régénération, l'empreinte d'image du fichier binaire original est stockée dans une mémoire ou une base de données.

3.  Procédé selon la revendication 1, dans lequel les bits de remplissage comprennent au moins deux bits.

4.  Procédé selon la revendication 1, dans lequel l'empreinte d'image du fichier binaire original comprend des valeurs de pixels aléatoires, et dans lequel l'automate cellulaire génétique :

    calcule une métrique pour adapter le fichier binaire original à l'empreinte ; et

    modifie des valeurs d'un pourcentage de pixels de l'empreinte en une valeur aléatoire dans une plage définie,

    dans lequel ladite au moins une partie régénérée du fichier est plus similaire au fichier binaire original.

5.  Procédé selon l'une quelconque des revendications précédentes, dans lequel l'étape de conversion du fichier binaire original en une image comprend en outre l'exécution d'un algorithme de stéganographie qui ajoute une série de métadonnées à l'image.

6.  Procédé selon la revendication 5, dans lequel la série de métadonnées inclut une clé symétrique.

7.  Procédé selon la revendication 5 ou 6, dans lequel la série de métadonnées est incluse dans les deux premiers bits de chaque pixel.

8.  Procédé selon l'une quelconque des revendications précédentes, dans lequel le format d'image est choisi parmi une série de formats d'image comprenant un ou plusieurs de : un format JPEG, PNG, GIF, TIFF, MPEG, ou un quelconque autre format d'image.

9.  Procédé selon l'une quelconque des revendications précédentes, dans lequel la couleur donnée comprend le noir/blanc ou un ton de gris.

10. Programme d'ordinateur incluant des instructions de code qui, lorsqu'elles sont exécutées dans un système d'ordinateur, mettent en œuvre le procédé selon l'une quelconque des revendications 1 à 9.

OK —————— ASCII conversion —————→ 79 75 —————— Binary conversion —————→ 01001111 01001011

Domain: 0-255                    Domain: 0-255                    Domain: 0-1

Base64 conversion + padding

010011 110100 1011(00) ——— Conversion to decimal ——→ 19 52 44 —————— Grayscale pixels —————→ | 19 | 52 | 44 |

Domain: 0-1                    Domain: 0-53                    Domain: 0-255
                                                              Domain used: 0-63

# Fig. 1

```
┌──────────────┐
│   INITIAL    │
│  POPULATION  │
└──────┬───────┘
       │
       ▼
┌──────────────┐
│  GENERATION  │◄─────────────┐
│  POPULATION  │              │
└──────┬───────┘              │
       │                      │
       ▼                      │
┌──────────────┐              │
│   FITNESS    │              │
│ CALCULATION  │              │
└──────┬───────┘              │
       │                      │
       ▼                      │
┌──────────────┐              │
│ SELECTION OF │              │
│   PARENTS    │              │
└──────┬───────┘              │
       │                      │
       ▼                      │
┌──────────────┐              │
│  CROSSOVER   │              │
└──────┬───────┘              │
       │                      │
       ▼                      │
┌──────────────┐              │
│   MUTATION   │              │
└──────┬───────┘              │
       │                      │
       ▼                      │
```

BEST FITNESS > *lim*
o
MAX GENERATIONS                  NO

YES

┌──────────────────┐
│    **SOLUTION**   │
│  BEST INDIVIDUAL  │
└──────────────────┘

# Fig.2

Fig. 3

Fig. 4

Fig. 5

Generation 0          Generation 20000          Generation 10000

# Fig. 6

Lorem ipsum dolor sit amet, consectetur adipiscing elit

Original file

File to img

File as img

Store fingerprint

Img as target

Memory

Lorem ipsum dolor sit amXX XXXXXX XXXXXXX elit

Corrupt file

Genetic alg.

Restored image

Img to file

Lorem ipsum dolor sit amet, consectetur adipiscing elit

Restored file

# Fig. 7

**REFERENCES CITED IN THE DESCRIPTION**

**Patent documents cited in the description**

- FR 3013257

**Non-patent literature cited in the description**

- A Genetic Algorithm Approach to Regenerate Image from a Reduce Scaled Image Using Bit Data Count. *Kishor Datta Gupta*